# EUROPEAN PATENT SPECIFICATION

(11) **EP 1 330 397 B1**
(45) Date of publication and mention of the grant of the patent: **06.06.2007**
(21) Application number: 01975326.8
(22) Date of filing: 25.09.2001
(51) Int. Cl.: B65D 51/16, A47J 36/02

(54) **FEEDING DISHES FOR CHILDREN**
GESCHIRR ZUM FÜTTERN VON KINDERN
VAISSELLE POUR ENFANTS

(30) Priority: 25.09.2000 US 235072 P
(43) Date of publication of application: 30.07.2003
(73) Proprietor: Hakim, Nouri E., Monroe 71201, Louisiana (US)
(72) Inventor: Hakim, Nouri E., Monroe 71201, Louisiana (US)
(74) Representative: Granleese, Rhian Jane
(86) International application number: PCT/US2001/029811
(87) International publication number: WO 2002/026087

(56) References cited:
- US-A- 112 352
- US-A- 1 818 249
- US-A- 2 514 094
- US-A- 3 107 027
- US-A- 4 574 174
- US-A- 5 169 023
- US-A- 5 363 978
- US-A- 5 509 564
- US-A- 5 690 245
- US-A- 5 706 973
- US-A- 5 750 967
- US-A- 5 806 703
- US-A- 5 992 308
- US-A- 5 998 419
- US-A- 6 029 843
- US-A- 6 035 769
- PATENT ABSTRACTS OF JAPAN vol. 015, no. 228 (M-1123), 11 June 1991 (1991-06-11) & JP 03 069482 A (MORII:KK), 25 March 1991 (1991-03-25)

## Description

The present application claims the priority of U.S. Provisional Application Serial No. 60/235,072 filed September 25, 2000.

The present invention is directed to improved feeding dishes for children, such as feeding plates and bowls.

Frequently, parents wish to heat up food not small children. One convenient way to do so is to place the food in a feeding dish and to heat the food in a microwave. However, if the food is heated without a top, the food (and or any liquid in the dish) can splatter**,** making a mess on the inside of the microwave.

An alternative is to heat the food with the lid only partially covering the dish, so as to prevent the problem of splattering. Yet, this is not an entirely satisfactory method either. Heating is somewhat inefficient using this method and some splattering may still occur due to the gap between the lid and the dish.

Furthermore, securely attaching the top to the dish is also relatively undesirable. Steam and heat can build up within the dish while heating. When the parent removes the top, that steam and heat may be quickly released. If the parent is not careful or if the child is nearby, the child can be exposed to this quick release of heat and steam when the top is removed.

Accordingly, there is a need in the art for improved feeding dishes which allow quick and relatively efficient heating in the microwave while preventing splattering, and which reduce or eliminate the risk of scalding the child when the top is removed.

US 6 035 769 describes a vacuum sealed preservation container having a lid which may be pressed to discharge gases in the container through a vent hole.

It is an object of the present invention to provide improved feeding dishes and containers for children.

It is a further object to provide improved feeding dishes for children which can be efficiently microwaved without splattering.

It is a further object to provide improved feeding dishes for children which reduce the risk of releasing steam or heat into the child's face when the top is removed.

Further objects of the invention will become apparent in conjunction with the disclosure provided herein.

In a first aspect, the present invention provides a feeding dish, comprising a container constructed of microwaveable material suitable for use in heating food;
said container being provided with a vent for the release of pressure from said container; characterized in that
said vent comprises a membrane of flexible material , said membrane comprising a slit , said flexible material comprising said slit operating as an automatic vent , that opens to release pressure when the pressure in said container rises sufficiently.

The present invention is directed to improved feeding dishes for children in the form of containers such as plates or bowls. The containers have components which allow pressure such as steam or other heat to be released from the container during heating.

The container includes a pressure release opening which is a vent, and is constructed of components which are suitable for being microwaved.

The vent automatically releases pressure from the container, once the pressure reaches a given level. After

In further preferred embodiments, the plates and bowls are composites of soft and hard components. For example, Kraton, silicone, TPE, or other flexible materials can be used for the soft components, and polypropylene or other rigid materials or rigid plastics can be used for the hard components.

The containers are also preferably suited for eating directly therefrom. They can be directly inserted into a microwave for heating their contents, and can also be used for storage of food in a refrigerator, or for travel.

### Brief Description of the Drawings

Figure 1 is a series of views of a feeding container in accordance with the present invention, with Figure 1(a) being a top view thereof, figure 1(b) being a perspective view thereof; and figure 1(c) being a side view.
Figure 2 is a further series of view of a feeding container showing a vent mechanism, in accordance with the present invention, with Figure 2(a) being a top view of the feeding container; Figure 2(b) being a cross-sectional view of section 48 of Figure 2(c) showing a pressure vent in the feeding container; and Figure 2(c) is a side view of the feeding container. Figure 2(d) is a top view of the vent in Figures 2(a)-2(c), with the slit in the closed position. Figure 2(e) is a top view of the vent in Figures 2(a)-2(c), with the slit open position.
Figure 3 is a series of views of an example of a feeding container useful for understanding the present invention showing a vent mechanism in a lid handle. Figure 3(a) is a top view of the feeding container; Figure 3(b) is a cross-sectional view of the feeding container showing a. pressure vent in the handle; and Figure 3(c) is a further cross-sectional view.
Figures 4(a) and 4(b) are perspective views of the feeding container of Figure 3.
Figure 5 is a series of views of an example useful for understanding the invention in which the lid handle has an integrated pressure vent, as follows:
Figure 5(a) is a front view of a lid handle having an integrated pressure vent.
Figure 5 (b) is a front view of an insert or extension off of the container lid which serves as a holder for the lid handle.
Figure 5(c) is a front view of the handle of Figure 5(a) located within the insert of Figure 5(b), with the configuration of handle an insert being in the open vent position.
Figure 5(d) is a front view of the handle of Figure 5(a) located within the insert of Figure. 5(b), with the configuration of handle and insert being in the closed vent position.
Figure 5(e) is a bottom view of the lid handle of Figure 5(a).
Figure 5(f) is a top view of the insert of Figure 5(b).
Figure 5(g) is a cross sectional vie of the handle of Figure 5(a) located within the insert of Figure 5(b), with the configuration of handle and insert being in the open vent position, viewed from the bottom of the assembly.
Figure 5(h) is a cross sectional view of the handle of Figure 5 (a) located within the insert of Figure 5(b), with the configuration of handle and insert being in the closed vent position, viewed from the top of the assembly.
Figure 5(i) is a back view of the configuration shown in Figure 5(d), with the handle and insert being in the closed vent position.
Figure 5(j) is a side view of the handle and insert showing a locking mechanism to lock the handle into a given configuration (whether an open or closed vent position).
Figure 6 are views of a further embodiment of the invention, a travel bowl with a flat lid. Figure 6(a) is a top view of the travel bowl; Figure 6(b) is a cross sectional view of the bowl of Figure 6(a); and Figure 6(c) is a enlargement of the vent of Figure 6(a) and 6(b).

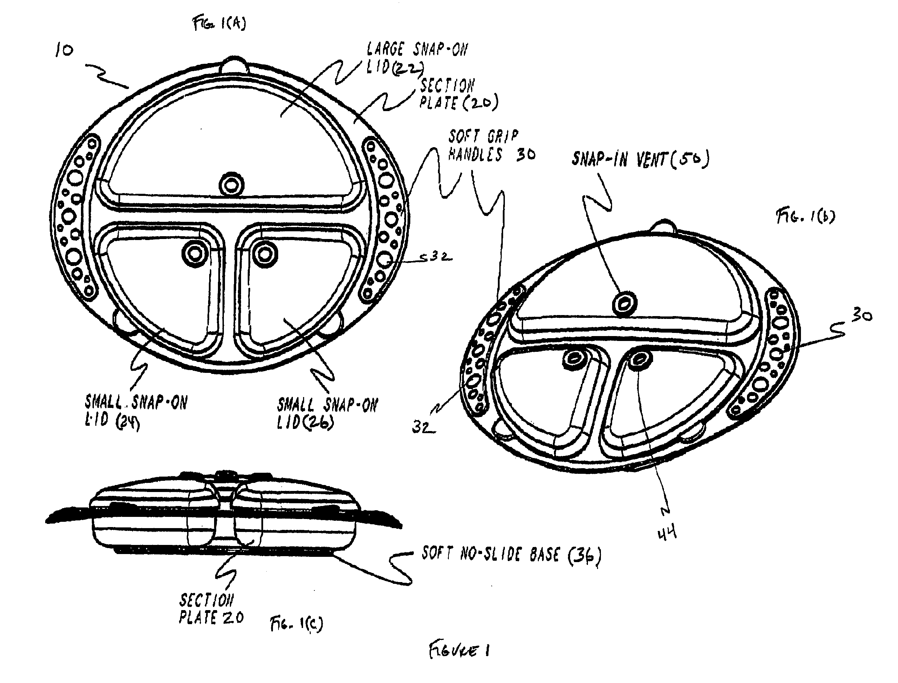

In accordance with the present invention, a feeding container is provided for feeding young children as shown in Figure 1. The bottom portion of feeding tray 10 is a plate 20. Plate 20 can be a regular plate or a sectional place, i.e. a plate with multiple compartments. In one embodiment, as shown in the figures, plate 20 includes three compartments. Any number of compartments of any desired sizes, however, can be provided consistent with the invention.

Plate 20 is covered by one or more lids. In a preferred embodiment, as shown in the figures, a separate lid is provided for each compartment. As shown in Figured 1(a), a large snap on lid 22 and small snap on lids 24 and 26 are used to cover individual compartments of the plate. Any configuration of sizes can be provided. Preferably, one lid is provided for each compartment, although a lid can be provided for more than one compartment if desired. For example, a single lid can be used to cover all of the plate's compartments at once, or two lids can be provided (one for a large compartment, and then a second lid provided for two smaller compartments), or so forth.

The use of multiple lids allows a parent to feed a child from each individual compartment by removing the lid from that one compartment, while the other lids remain attached. Thus, while the child is being fed from that one compartment, the lids attached to the other compartments keep the food in those other compartments warm. In addition, should the child knock the plate over, the waste of food is minimized to spillage from a single compartment only, since the other lids remain attached to the plate. Preferably, the lids are snap-on lids, with a tab 28 provided to each lid to pull the lid off of the plate.

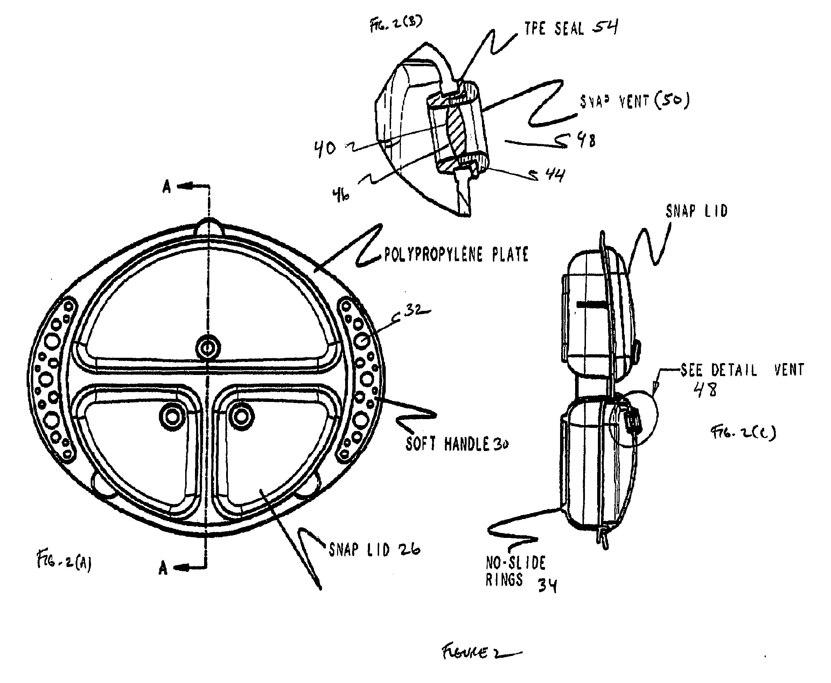

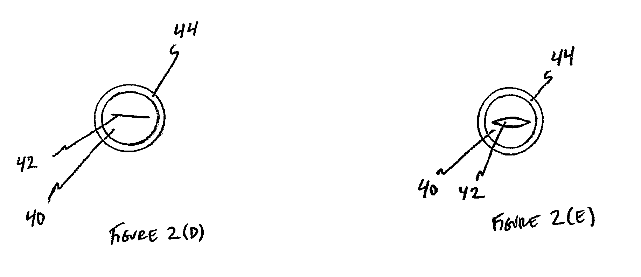

In accordance with the invention, the container also has one or more pressure release vents therein. In the preferred embodiment, each of the lids of the plate (or each of the compartments) has a pressure vent. One such pressure vent 50 is shown in Figures 1 and 2, although any other desired vent can be used as well.

The pressure vent 50 is provided so the plate can be warmed safely in a microwave while the lid is attached to the tray. This vent prevent the container from exploding in the microwave, and prevents excessive pressure from being into the child (or parent's) face when the lid is removed. An automatic vent is used (which releases pressure when it rises to a given level) in an embodiment of the present invention. A manual vent can be used (which is opened and closed by the parent) in an example useful for understanding the present invention. An example of an automatic vent is vent 50 as shown in Figures 1 and 2; an example of a manual vent is vent 90 in lid handle 100, as shown in Figures, 3 to 5. The vent can be located an where on the container. Preferably, it is located on the lid, whether in a corner, on an edge, or in any other desired location.

In one preferred embodiment of an automatic vent, vent 50 consists of a ring 44 which is snapped onto each of the lids 22, 24 and 26, as shown in Figures 2(a)-2(e). For example, as shown in Figure 2(b), a first component, such as a lower gasket or soft seal 54 (eg. TPE) is inserted into a hole in the lid, or molded as part of the lid, An elastic membrane 40 is placed onto the gasket or seal 54. The ring 44 is then snapped onto or otherwise adhered to the gasket 54 and membrane 40, sandwiching the membrane 40 between the ring 44 and the gasket 54.

With particular reference to the top views shown in Figures 2(d) - 2(e), the elastic membrane 40 consists of a circular sheet of flexible material. This flexible material or membrane 40 has a slit 42 through it. Normally, the slit 42 is closed, i.e. the edges of the slit are pressed against each other so that the vent is in the closed position, as shown in Figure 2(d). When pressure builds up within the container, i.e. below the membranes shown in Figures 2(d)-2(e), it pushes or flexes the membrane outward (away from the container). The edges of the membrane are fixed by the ring, so the center flexes upward, forcing the slit 42 open, as shown in Figure 2(e). When slit 42 opens, pressure is released from the container.

Once pressure is released from the container, the membrane returns to its original closed position, as show in Figure 2(d). (Since the pressure has been released, it is no longer high enough to press the membrane outward enough to open the vent). Thus, vent 50 automatically opens to release pressure when the pressure rises sufficiently, and also automatically closes itself when the pressure sufficiently drops.

In summary, when a plate of food is heated in the microwave, pressure can build up in each of the compartments of the container of the invention. When the pressure in the container or a section thereof builds to a predetermined level, the pressure is released through the vent in the lid. As pressure builds, the membrane flexes upward, stretching the slit to open it. This opening of the slit releases any of the pressure built up underneath. Thus, the place will not explode, ascan happen when a tightly sealed food tray is microwaved for too long.

Various shaped membranes can be used consistent with the invention. For example, in one embodiment the membrane is concave, pressing the edges of the slit against each other and closing the slit as shown by configuration 46 in Figure 2(b). This membrane sits inside the ring, as discussed above. However, non-concave membranes can be used as well, and the interior ring 44 can be in a shape other than cylindrical, with the ring non-circular, if desired.

Likewise, any other automatic vent configuration can also be used consistent with the invention, the configuration of Figure 2 being shown as merely one preferred embodiment. Some other examples of vents which respond to changes in pressure are shown in PCT Application Serial No. PCT/US98/17379 filed August 21, 1998 (International Publication No. WO 99/08578), and PCT Application Serial No. PCT/US99/19238 filed August 20, 1999 (International Publication No. WO 00/10434).

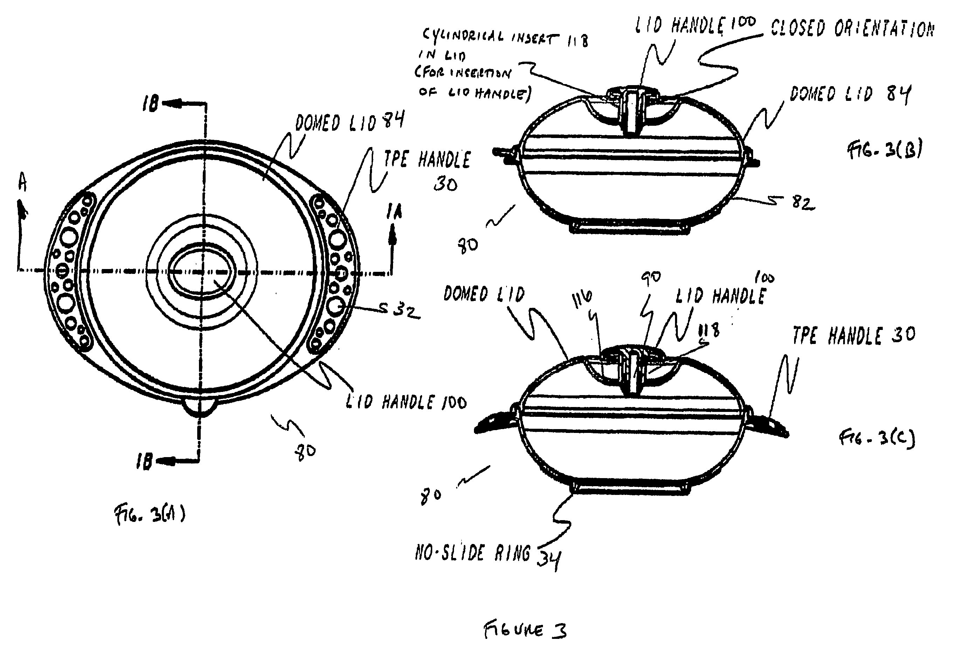

It examples useful for understanding the invention manual vent configurations can also be used. For example, a hole can be provided in the lid of a container with a small snap on cover covering that hole (the cover being attached to the lid, or separate from it). The parent removes the small cover from the hole to release pressure (before or after microwaving the food) and replaces the small cover once the compartment has be vented. The cover can be attached via a strap to the lid so that it is not lost when removed. Alternately, in another example useful for understanding the invention a turning manual vent can be provided as shown in Figures 3-5.

Similarly, many other automatic vents are known in the art and can be used with the current containers.

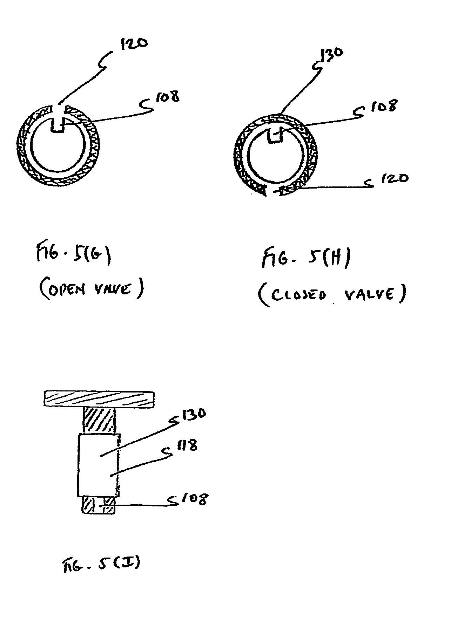

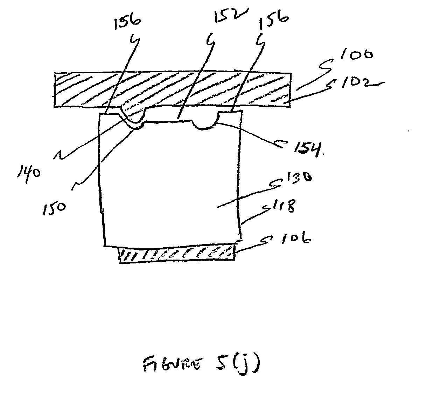

In accordance with the preferred embodiments of the invention (as with the vent of Figures 2 and 5), the lid remains attached to the plate while excess pressure is vented. Thus, explosions are eliminated, but the lid is always affixed to the tray while hearing and thereafter. This speeds up the heating process and assists in preserving the food warm until the patent removes the lid from the tray. Additionally, since the lid is affixed to the compartment, food or liquid will not splatter out of the container and make a mess within the microwave. Moreover, once the excess pressure has been released, the elastic membrane reverts to the closed position, preventing loss of hear from the container,

Further in accordance with preferred embodiments of the invention, the feeding dishes include both relatively soft and relatively hard components, as shown in the figures. For example, soft grip handles 30 are provided on the top of the plate on the hard handles, as shown in Figures 1-4. These soft handles present a better gripping surface than a hard, plastic, and preferably also have raised (or indented) bumps or ridges 32 which further assist in gripping the handles. A strip of soft material can be affixed to the handle, by any desired means. For example, it can be adhered with adhesive, or, the soft material can be molded onto the top of the handle and protrude into the handle (or through the cross section of the hard handle), or so forth.

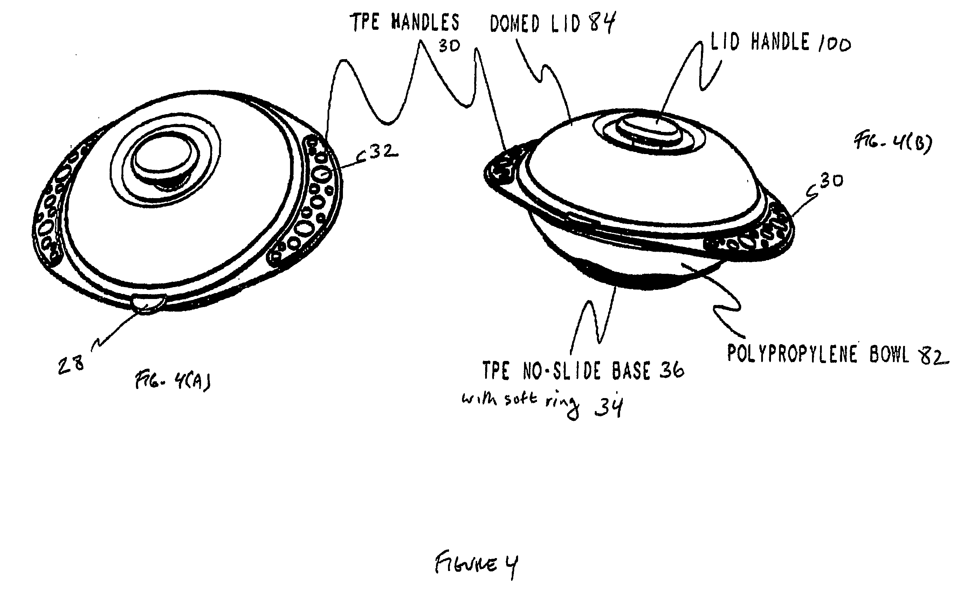

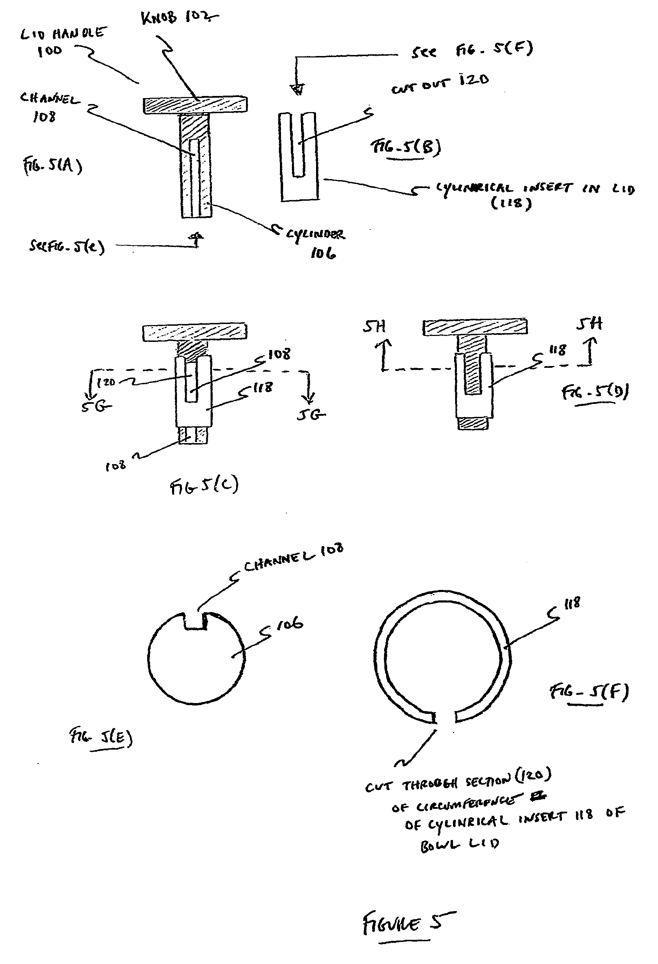

In an additional or alternate embodiment, a soft no-slide or slide resistant base 36 is provided on the hard bottom of the container to prevent skidding of the plate across a table surface, as shown in Figure 4. All of the feeding containers of the present invention preferably include such a two component base. The bottoms of the containers are constructed of a hard material (e.g. polypropylene), but preferably have no-slide components inserted onto the base (preferably soft materials, such as Kraton, or so forth). For example, one or more soft rings 34 can be provided to the hard base, as shown in Figures 1(c), 2(c) and 3(c). These rings prevent the feeding containers from sliding over the surface of a table or other such as the baby's high chair. The rings can be uniform have a scalloped edge, etc. These soft rings 34 can also be affixed by adhesive, by molding, or by any other desired means, as discussed with the soft handle above.

While the top of the handle and the bottom of the base are preferably soft, other components of the invention (e.g. the plate) are preferably made of harder materials to facilitate cleaning food particles therefrom. In one preferred embodiment, the softer components are made of Kraton while the harder components are made of polypropylene. In other embodiments, other soft components such as silicone, TPE, or so forth can also be used, and other hard components such as other rigid plastics can be used, all consistent with the invention.

In a further embodiment of the invention, a feeding bowl is provided as shown in Figures 3 through 5. Feeding bowl 80 includes a bowl 82 and a domed lid 84. The construction of the feeding bowl is similar to that of the feeding plate described above, and like wise includes a pressure valve therein.

In a preferred embodiment of the feeding bowl, however, the pressure valve is incorporated in a lid handle, as also shown in Figures 3 through 4.

Although an automatic pressure valve with a slit is preferred for the plate, and a manual vent in a handle is preferred for the domed lid bowl, it will be understood, of course, that either vent could be used for the plate or domed lid bowl.

As shown in Figure 5, in an example useful for understanding the invention in a feeding bowl a manual vent is located in a lid handle 100. Lid handle 100 includes a knob 102 attached to a cylinder 106. Cylinder 106 includes a recessed channel 108 therein.

As shown in Figure 3, the feeding bowl's lid includes an insert piece or handle holder 118 at the top of the lid. Insert piece or handle holder 118 (preferably cylindrical) is an extension off of the lid of the container, which is provided for the lid handle to be inserted therein. Preferably, this extension off the lid or insert piece 118 is integrally molded with the lid as a single piece. In other words, the top of the lid has an indentation 116, and rising out of this indentation 116 is the handle holder, extension or insert 118. The indentation 116 provides a space around the lid handle 100, between the handle and the lid 84, for a parent's fingers to turn the handle. However, instead of rising off of an indentation 116, insert 118 can also rise up off of a flat top of the lid 84, or off of a flat lid for a bowl.

As shown in Figure 5(a) - 5(d), cylinder 106 of lid handle 100 inserts into the cylindrical insert piece 118 of lid 84. Cylindrical insert 118 includes a lid channel or cut-out 120. Lid channel or cut-out 120, shown in Figures 5(b) and 5(f), is the shape which results after a rectangular (or trapezoidal) section of the cylindrical insert piece 118 has been cut lengthwise down part of the height of the cylinder, through the circumference, and has been removed from the insert 118. In other words, a strip of material is removed from one side of the cylinder to form the lid channel or cut-out 120 shown in Figures 5(b) and 5(f). The removal of this strip forms a space in the cylindrical insert 118, such as that between two prongs of a fork. Of course, this description is merely provided for illustration purposes; a section of the insert 118 does not need to be actually cut to provide the cut out or channel 120, since the insert 118 can be merely molded into this shape to begin with. Likewise, any other shaped channel can also be provided consistent with the invention.

Lid channel or cut out 120 extends from the top of the cylindrical insert piece 118, down part of the length of that insert piece. A corresponding cut out or channel is provided in lid handle 100. This corresponding cut out is handle channel 108 shown in Figure 5(a). In contrast to the lid channel 120 which extends top to bottom, handle channel 108 extends bottom to top. In other words, handle channel 108 extends from the bottom of the lid handle up part of the length of cylinder 106 of the handle 100. (Alternately, these configurations of the channel 108 and the channel 120 could be reversed).

After inserting lid handle 100 into insert 118, lid handle 100 can be rotated within the cylindrical insert 118 by rotating knob 102.

When rotated to the open position, channel 108 of lid handle 100 overlaps with channel 120 of cylindrical insert 118 of the lid. As a result, air can flow from the container, into the bottom of cylinder 106, into the channel 108, and out through channel 120 to exit the bowl, as shown in the front view of Figure 5(c) and the cross sectional view of Figure 5(g).

When rotated to the closed position, channel 108 of lid handle 100 overlaps with the solid portion of the cylindrical insert 118, i.e. solid section 130 of the circumference shown in Figure 5(h). As a result, air flowing through the channel 108 is blocked by section 130 of the circumference of the insert piece 118. Section 130 is any solid section along the circumference, i.e. any section other than cut out 120. Since section 130 covers the channel 108 along much of its length and seals off the top portion of channel 108, it closes off the channel 108 such that air cannot flow out of the bowl. This closed vent configuration is shown in the front view of Figure 5(d), the cross sectional view of Figure 5(h), and the back view of Figure 5(i). While these views show the channel 108 offset 180 degrees from the channel 120, it will be understood that the channel 108 can be offset, of course, by a lesser rotation as well, the channel 108 being closed so long as it does not overlap with the channel 120 or so long as the top of the channel 108 is covered.

In summary, the lid includes a channel (cut out 120), and the lid handle includes a corresponding channel 108. The handle can be rotated such that the two channels overlap, to release pressure from inside the container Or, the handle can be rotated such that they dot not overlap, to retain pressure and heat within the container.

In an additional embodiment, as shown in figure 5(j), it is further preferred that a "locking" mechanism be provided to the handle, i.e. a mechanism for holding the handle somewhat securely in a given configuration, whether in the open vent or closed vent position. As shown in the figure, a bump or protuberance 140 is preferably provided off of lid handle 100 (e.g. off of knob 102). This bump 140 can be rotated into an indentation 150 or 154 in the top of the insert 118. The top surface 152 between indentations 150 and 154 is lower than the top surface 156 of solid section 130 of insert 118. As a result, the bump can be rotated between indentations 150 and 154, but not further in either direction.

When the bump 140 is rotated into indentation 150, the lid handle is in the open vent position; when the bump 140 is rotated into indentation 154, the lid handle is in the closed vent position. For illustration purposes, a spacing between indentations 150 and 154 is shown wherein the open and closed vent positions are offset by an are of less than 180 degree, although a greater or lesser spacing and arc can be used, as desired.

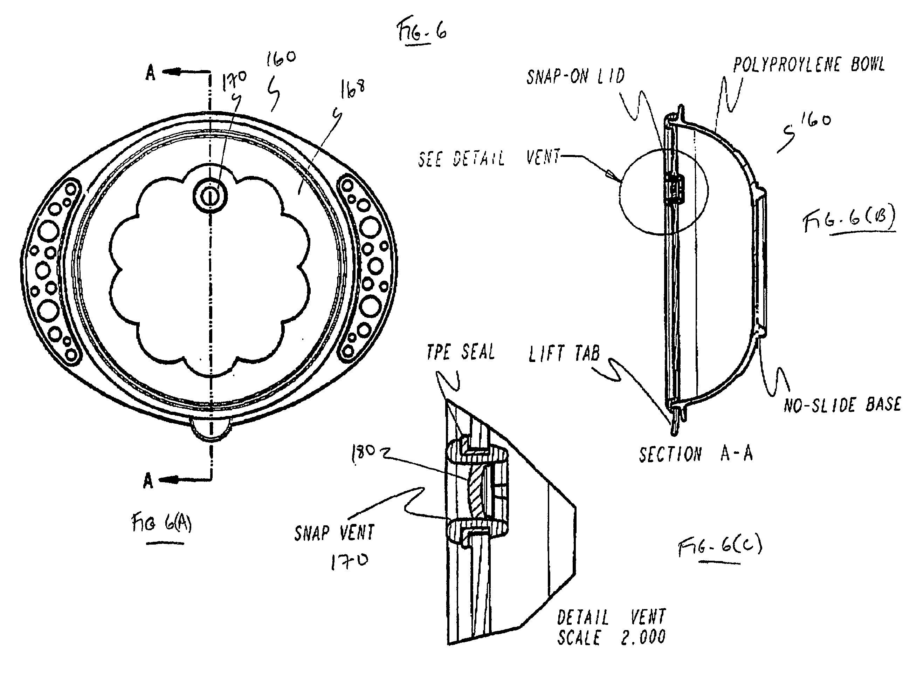

A further embodiments showing a travel bowl with a flat lid, is shown in Figure 6. This embodiment is similar to the embodiments of the invention described above. Bowl 160 includes a flat lid 168 having a manual vent 170. Automatic vent 170 is similar to vent 50 of Figure 2, and includes a membrane 180, Membrane 180 is a slightly modified shape from membrane 40. This membrane can be used for the other containers discussed above, and reflects a further preferred embodiment. Like vent 50, vent 170 includes a slit in membrane 180. Pressure within the container causes expansion of the membrane 180, stretching open the slit to release the built up pressure from the container.

## Claims

1. A feeding dish, comprising:
a container constructed of microwaveable material suitable for use in heating food;
said container being provided with a vent 50 for the release of pressure from said container; **characterized in that**:
said vent comprises a membrane of flexible material 40, said membrane comprising a slit 42], said flexible material 40 comprising said slit 42 operating as an automatic vent, that opens to release pressure when the pressure in said container rises sufficiently.

2. A feeding dish as claimed in claim 1, wherein said vent 50 automatically closes itself when the pressure sufficiently drops.

3. A feeding dish as claimed in any of the preceding claims, wherein said vent 50 comprises a concave membrane.

4. A feeding dish as claimed in claim 1, wherein said vent comprises a membrane sandwiched between a ring 44 and a gasket 54.

5. A feeding dish as claimed in any of the preceding claims, wherein said container comprises a lid (22, 24, 26), and wherein said vent is in said lid.

6. A feeding dish as claimed in claim 4, wherein said vent comprises a ring 44 attached to said lid.

7. A feeding dish as claimed in claim 4, wherein said apparatus comprises a gasket 54 inserted into a hole in said lid.

8. A feeding dish as claimed in any of the preceding claims wherein said container comprises compartments.

9. A feeding dish as claimed in claim 7, wherein each of said compartments has a lid.

10. A feeding dish as claimed in claim 4, wherein said lid comprises a tab 28 for pulling said lid off of said container.

11. A feeding dish as claimed in claim 4, wherein said lid is a snap-on lid.

12. A feeding dish as claimed in claim 8, wherein each lid of each of said compartments comprises a vent.

13. A feeding dish as claimed in any of the preceding claims wherein said container is constructed of soft and hard components.

14. A feeding dish as claimed in any of the preceding claims wherein said container includes a soft grip handle 30.

15. A feeding dish as claimed in any of the preceding claims wherein said container includes a soft, slide-resistant base 36.

## Patentansprüche

1. Fütterteller, der Folgendes umfasst:
einen aus mikrowellenfähigem Material aufgebauten Behälter, geeignet zur Verwendung zum Erwärmen von Nahrungsmitteln,
wobei der Behälter mit einer Entlüftungsöffnung (50) zum Ablassen von Druck aus dem Behälter versehen ist, **dadurch gekennzeichnet, dass**:
die Entlüftungsöffnung eine Membran aus einem flexiblen Material (40) umfasst, wobei die Membran einen Schlitz (42) umfasst, wobei das flexible Material (40) den Schlitz (42) umfasst, der als eine selbsttätige Entlüftungsöffnung arbeitet, die sich öffnet, um Druck abzulassen, wenn der Druck in dem Behälter ausreichend ansteigt.

2. Fütterteller nach Anspruch 1, wobei die Entlüftungsöffnung (50) sich selbsttätig schließt, wenn der Druck ausreichend abfällt.

3. Fütterteller nach einem der vorhergehenden Ansprüche, wobei die Entlüftungsöffnung (50) eine konkave Membran umfasst.

4. Fütterteller nach Anspruch 1, wobei die Entlüftungsöffnung eine zwischen einem Ring (44) und einer Dichtung (54) eingeschobene Membran umfasst.

5. Fütterteller nach einem der vorhergehenden Ansprüche, wobei der Behälter einen Deckel (22, 24, 26) umfasst und wobei sich die Entlüftungsöffnung in dem Deckel befindet.

6. Fütterteller nach Anspruch 4, wobei die Entlüftungsöffnung einen an dem Deckel befestigten Ring (44) umfasst.

7. Fütterteller nach Anspruch 4, wobei die Vorrichtung eine in ein Loch in dem Deckel eingesetzte Dichtung (54) umfasst.

8. Fütterteller nach einem der vorhergehenden Ansprüche, wobei der Behälter Abteilungen umfasst.

9. Fütterteller nach Anspruch 7, wobei jede der Abteilungen einen Deckel hat.

10. Fütterteller nach Anspruch 4, wobei der Deckel eine Lasche (28) umfasst, um den Deckel von dem Behälter abzuziehen.

11. Fütterteller nach Anspruch 4, wobei der Deckel ein Schnappdeckel ist.

12. Fütterteller nach Anspruch 8, wobei jeder Deckel jeder der Abteilungen eine Entlüftungsöffnung umfasst.

13. Fütterteller nach einem der vorhergehenden Ansprüche, wobei der Behälter aus weichen und harten Bestandteilen aufgebaut ist.

14. Fütterteller nach einem der vorhergehenden Ansprüche, wobei der Behälter einen weichen Griff (30) einschließt.

15. Fütterteller nach einem der vorhergehenden Ansprüche, wobei der Behälter eine weiche, rutschfeste Basis (36) einschließt.

## Revendications

1. Assiette à bouillie, comprenant:
un récipient composé de matériau résistant au four à micro-ondes approprié pour chauffer des aliments;
ledit récipient comportant un évent (50) pour assurer le dégagement de la pression dudit récipient, **caractérisée en ce que**
ledit évent comprend une membrane en matériau flexible (40), ladite membrane comprenant une fente (42), ledit matériau flexible (40) comportant ladite fente (42) servant d'évent automatique, ouvert pour dégager la pression lors d'un accroissement suffisant de la pression dans ledit récipient.

2. Assiette à bouillie selon la revendication 1, dans laquelle ledit évent (50) se ferme automatiquement lors d'une chute suffisante de la pression.

3. Assiette à bouillie selon l'une quelconque des revendications précédentes, dans laquelle ledit évent (50) comprend une membrane concave.

4. Assiette à bouillie selon la revendication 1, dans laquelle ledit évent comprend une membrane agencée en sandwich entre une bague (44) et un joint étanche (54).

5. Assiette à bouillie selon l'une quelconque des revendications précédentes, dans laquelle ledit récipient comprend un couvercle (22, 24, 26), ledit évent étant agencé dans ledit couvercle.

6. Assiette à bouillie selon la revendication 4, dans laquelle ledit évent comprend une bague (44) fixée sur ledit couvercle.

7. Assiette à bouillie selon la revendication 4, dans laquelle ledit dispositif comprend un joint étanche (54) inséré dans un trou dans ledit couvercle.

8. Assiette à bouillie selon l'une quelconque des revendications précédentes, dans laquelle ledit récipient comprend des compartiments.

9. Assiette à bouillie selon la revendication 7, dans laquelle chacun desdits compartiments comporte un couvercle.

10. Assiette à bouillie selon la revendication 4, dans laquelle ledit couvercle comprend une patte (28) pour retirer ledit couvercle dudit récipient.

11. Assiette à bouillie selon la revendication 4, dans laquelle ledit couvercle est un couvercle à encliquetage.

12. Assiette à bouillie selon la revendication 8, dans laquelle chaque couvercle de chacun desdits compartiments comprend un évent.

13. Assiette à bouillie selon l'une quelconque des revendications précédentes, dans laquelle ledit récipient comprend des composants mous et durs.

14. Assiette à bouillie selon l'une quelconque des revendications précédentes, dans laquelle ledit récipient englobe une poignée de préhension (30) en matériau mou.

15. Assiette à bouillie selon l'une quelconque des revendications précédentes, dans laquelle ledit récipient englobe une base (36) en matériau mou, résistante au glissement.
